(19) Europäisches Patentamt / European Patent Office / Office européen des brevets

(11) **EP 2 600 376 B1**

(12) **FASCICULE DE BREVET EUROPEEN**

(45) Date de publication et mention
de la délivrance du brevet:
**02.08.2017 Bulletin 2017/31**

(51) Int Cl.:
***H01H 47/26*** *(2006.01)* ***H01H 50/12*** *(2006.01)*
***H01H 50/00*** *(2006.01)*

(21) Numéro de dépôt: **12306246.5**

(22) Date de dépôt: **12.10.2012**

(54) **Procédé d'évaluation de la température d'un contacteur électromagnétique et contacteur pour la mise en oeuvre dudit procédé**

Verfahren zur Abschätzung der Temperatur eines elektromagnetischen Schaltschützes, und Schaltschütz zur Umsetzung dieses Verfahrens

Method for evaluating the temperature of an electromagnetic contactor and contactor for implementation of said method.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2011 FR 1103682**

(43) Date de publication de la demande:
**05.06.2013 Bulletin 2013/23**

(73) Titulaire: **Schneider Electric Industries SAS**
**92500 Rueil-Malmaison (FR)**

(72) Inventeurs:
• **Delbaere, Stéphane**
**38050 GRENOBLE Cedex 9 (FR)**

• **Orban, Rémy**
**38050 GRENOBLE Cedex 9 (FR)**

(74) Mandataire: **Tripodi, Paul et al**
**Schneider Electric Industries SAS**
**Service Propriété Industrielle**
**World Trade Center - E1**
**5 Place Robert Schuman**
**38050 Grenoble Cedex 9 (FR)**

(56) Documents cités:
**EP-A2- 1 067 571 EP-A2- 1 120 805**
**US-A1- 2004 240 140 US-A1- 2008 074 215**

EP 2 600 376 B1

**Description**

DOMAINE TECHNIQUE DE L'INVENTION

L'invention est relative à un procédé d'évaluation de la température d'un contacteur comprenant une unité de traitement destinée à agir sur des moyens de commande de la tension d'une bobine d'actionnement. Des moyens de mesure mesurent un courant électrique circulant dans la bobine d'actionnement.

L'invention est aussi relative à un contacteur pour la mise en oeuvre dudit procédé. Le contacteur comporte un actionneur électromagnétique ayant une culasse magnétique et un noyau ferromagnétique mobile, des moyens de commande d'une une bobine d'actionnement. Des moyens de mesure mesurent un courant électrique dans la bobine d'actionnement.

ETAT DE LA TECHNIQUE ANTERIEURE

Les contacteurs électriques sont des produits sensibles à la température. En particulier, en phase de fermeture des contacts de puissance, une température trop élevée peut engendrer un dysfonctionnement. En effet, lorsque la tension de commande est appliquée au contacteur, le comportement dynamique de la partie mobile du contacteur dépend de la résistance électrique de la bobine. Or celle-ci dépend de la température. Ainsi, lorsque la température est trop élevée, il y a un risque que les contacts de puissance aient difficulté à se fermer, entraînant des rebonds de contacts, pouvant générer jusqu'à la soudure de ces contacts et l'impossibilité ensuite d'ouvrir le contacteur. Par ailleurs, en phase de maintien, un échauffement du contacteur peut se produire en cours de fonctionnement (ex : échauffement des bornes de raccordement pour cause de mauvais serrage, ou échauffement des plages puissance lorsque le contacteur est soumis à un courant de puissance trop élevée, ou échauffement du tableau dans lequel il est installé, ou manoeuvres de fermeture / ouverture trop rapprochées et trop fréquentes, etc.). Or, un échauffement trop élevé du produit peut entraîner jusqu'à une fonte partielle des supports plastiques pouvant empêcher le déplacement des parties mobiles et dans le pire des cas bloquer l'ouverture des contacts puissance.

Pour cette raison, certains contacteurs électriques intègrent aujourd'hui un détecteur de température associé à des moyens de traitement. Des procédures de suivi de la température d'un contacteur sont appelées à être implémentées de plus en plus souvent dans les moyens de traitement des contacteurs afin notamment de prévoir une maintenance adaptée au cours de l'utilisation dudit contacteur. L'utilisation d'un détecteur de température présente l'inconvénient de mesurer une température locale ne correspondant généralement pas réellement à la température de la bobine du contacteur. Or, les risques de non fonctionnement, en phase d'appel ou au maintien, sont très liés à la valeur de la température de la bobine. En outre, l'implémentation de ces méthodes d'évaluation de la température locale basée sur l'utilisation de capteurs spécifiques, entraine généralement des coûts supplémentaires souvent rédhibitoires pour une utilisation industrielle des produits. Un tel procédé et un tel contacteur sont connus du document US 2008/074215 A1.

EXPOSE DE L'INVENTION

L'invention vise donc à remédier aux inconvénients de l'état de la technique, de manière à proposer un procédé d'évaluation de la température d'un contacteur, basé sur la détermination de la température de la bobine sans capteur ajouté.

Le procédé selon l'invention consiste à :

- envoyer un ordre de fermeture consistant à appliquer une tension aux bornes de la bobine d'actionnement permettant de faire évoluer le courant électrique circulant dans la bobine jusqu'à une première valeur étalon ;
- envoyer un ordre de retombée consistant à fixer une tension dite de retombée aux bornes de la bobine d'actionnement ;
- mesurer le courant électrique circulant de ladite bobine d'actionnement ;
- faire l'acquisition de valeurs spécifiques sur un signal du courant électrique;
- analyser des valeurs spécifiques pour une évaluation de la température de fonctionnement de la bobine d'actionnement.

Selon un premier mode de développement de l'invention, la phase d'acquisition de valeurs spécifiques sur le signal de courant électrique circulant dans la bobine d'actionnement consiste à déterminer une seconde valeur étalon du courant électrique, la seconde valeur étalon étant atteinte après un temps de décroissance.

Selon un mode particulier, le procédé consiste à déterminer une seconde valeur étalon égale à la valeur du courant électrique circulant dans la bobine d'actionnement après un temps de décroissance déterminé, la seconde valeur étalon étant inférieure à la première valeur étalon.

Selon un autre mode particulier, le procédé consiste à déterminer un temps de décroissance du courant électrique circulant dans la bobine d'actionnement pour atteindre une valeur de courant électrique, la seconde valeur étalon étant fixée et étant inférieure à la première valeur étalon.

Selon ce premier mode de réalisation, le procédé consiste à déterminer la valeur de la résistance de la bobine d'actionnement à partir des première et seconde valeurs étalon et du temps de décroissance, ladite résistance de la bobine d'actionnement s'exprimant sous la forme de l'équation :

$$(I2 + U_{bob}/(R_{bob}+R_{eps})) \, / \, (I1 + U_{bob}/(R_{bob}+R_{eps})) = \exp(-DT \times R_{bob}/L_{bob})$$

dans laquelle

-   $U_{bob}$ égale à la tension bobine ;
-   $R_{eps}$ égale à la somme des résistances supplémentaires présentes dans le circuit électronique ;
-   $L_{bob}$ : Self de la bobine ;
-   DT = t2-t1, correspondant à la durée séparant les instants où le courant passe par les deux valeurs étalons I1 et I2, lors de sa décroissance.

Avantageusement, le procédé consiste à évaluer la température du contacteur en fonction de la résistance de la bobine d'actionnement, la température de la bobine d'actionnement s'exprimant sous la forme de l'équation :

$$T_{bob} = T_{init} + \frac{R_{bob} / R_{init} - 1}{\alpha}$$

dans laquelle

-   $\alpha$ : coefficient thermique de la résistance électrique (environ 0,004)
-   $R_{init}$ égale à une résistance de la bobine à une température dite initiale $T_{init}$.
-   $T_{init}$ égale à une température dite initiale généralement égale à une température ambiante.

Selon un second mode de développement de l'invention, la phase d'acquisition des valeurs spécifiques sur le signal de courant électrique circulant dans la bobine d'actionnement consiste à relever une courbe de décroissance du courant électrique dans ladite bobine entre la première valeur étalon et une seconde valeur étalon.

Avantageusement, la phase d'analyse et d'évaluation consiste comparer ladite courbe de décroissance à un gabarit de fonctionnement spécifique du contacteur, l'évaluation de la résistance température du contacteur étant alors fonction du positionnement de ladite courbe de décroissance par rapport audit gabarit.

Selon une variante de réalisation, l'étape consistant à envoyer un ordre de retombée en fixant une tension dite de retombée aux bornes de la bobine d'actionnement est précédée d'une phase de stabilisation du courant électrique.

Avantageusement, le courant électrique est stabilisé à la première valeur étalon.

De préférence, la tension de retombée est fixée par la diode de roue libre, la bobine d'actionnement étant en mode « roue libre » pendant tout le temps de décroissance.

Le contacteur selon l'invention pour la mise en oeuvre du procédé d'évaluation de la température tel que défini ci-dessus comprend une unité de traitement ayant :

-   des moyens pour faire l'acquisition de valeurs spécifiques sur un signal du courant électrique ;
-   des moyens pour analyser des valeurs spécifiques pour une évaluation de la température de fonctionnement de la bobine d'actionnement.

Le contacteur comporte au aussi moins une diode de roue libre connectée en parallèle de ladite au moins une bobine d'actionnement et les moyens de mesure.

BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

Les figures 1 et 2 représentent des schémas électriques fonctionnels de circuits de commande et de régulation adaptés pour la mise en oeuvre d'un procédé d'évaluation selon les différents modes de réalisation de l'invention ;

la figure 3 représente des courbes d'évolution de courant mesurés au cours du procédé d'évaluation de la température d'un contacteur dans différents états de fonctionnement ;

La figure 4 représente des courbes d'évolution d'un courant de retombée et d'un gabarit correspondant respectivement à des courbes d'évolution théoriques pour un contacteur fonctionnant à des températures minimale et maximale tolérées ;

la figure 5 représente un schéma de principe d'actionneur de contacteur selon un mode de réalisation de l'invention.

## DESCRIPTION DETAILLEE D'UN MODE DE REALISATION

Le procédé d'évaluation de température dans un état de fonctionnement d'un contacteur selon l'invention est particulièrement destiné à un contacteur ayant un actionneur électromagnétique comprenant un circuit magnétique formé d'une culasse magnétique 4 et d'une partie mobile 5 ferromagnétique (figure 6). Le déplacement de la partie mobile est commandé par au moins une bobine d'actionnement 3 reliée à une première et seconde bornes d'alimentation B1, B2 à travers des moyens de commande 20 de la tension bobine. Une unité de traitement 2 est destinée à agir sur les moyens de commande 20 de la tension bobine, tels notamment des transistors de type MOS ou de type IGBT.
Le procédé d'évaluation de température dans un état de fonctionnement du contacteur comporte quatre étapes successives.

- Une phase de préparation de la bobine d'actionnement 3 ;

- Une phase de mesure du courant électrique I dans la bobine d'actionnement 3 avec des moyens de mesure 24 ;

- Une phase d'acquisition de valeurs spécifiques sur le signal du courant électrique I circulant dans la bobine d'actionnement 3.

- Une phase d'analyse des valeurs spécifiques pour une évaluation de la température de fonctionnement de la bobine d'actionnement 3.

La phase de préparation consiste dans un premier temps à envoyer un ordre de fermeture consistant à appliquer une tension U aux bornes L1, L2 de la bobine d'actionnement 3 pour faire évoluer le courant électrique I circulant dans la bobine jusqu'à une première valeur étalon I1. La phase de préparation consiste ensuite à envoyer un ordre de retombée consistant à fixer une tension dite de retombée aux bornes L1, L2 de la bobine d'actionnement 3. De manière avantageuse, la phase de préparation peut intégrer une phase de stabilisation. En effet, le courant 1 peut être stabilisé à ladite valeur étalon I1 pendant un temps suffisant pour permettre au flux magnétique dans l'actionneur d'être lui-même stabilisé. Après cette phase intermédiaire de stabilisation, l'ordre de retombée peut alors être envoyé.
La phase de mesure consiste à mesurer la décroissance du courant électrique dans la bobine d'actionnement jusqu'à ce que le courant atteigne une deuxième valeur étalon I2.
Selon un premier mode préférentiel de réalisation de l'invention, la phase d'acquisition des valeurs spécifiques sur le signal de courant électrique I circulant dans la bobine d'actionnement 3 consiste à déterminer une seconde valeur étalon I2 du courant électrique. La seconde valeur étalon I2 est atteinte après un temps de décroissance DT
Selon un premier mode particulier de réalisation du premier mode préférentiel, le procédé consiste à fixer un temps de décroissance DT et d'acquérir la seconde valeur étalon I2.
Selon un seconde mode particulier de réalisation du premier mode préférentiel, le procédé consiste à fixer la seconde valeur étalon I2 et d'acquérir le temps de décroissance DT nécessaire au courant électrique I pour passer d'une première valeur étalon I1 à seconde valeur étalon I2
La phase d'analyse et de d'évaluation consiste alors à déterminer à partir des première et seconde valeurs étalons I1, I2 et du temps de décroissance DT, la résistance $R_{bob}$ de la bobine d'actionnement 3. Selon ce premier mode de réalisation, l'évaluation de la température du contacteur est fonction de ladite résistance $R_{bob}$ de la bobine d'actionnement.
L'équation de la décroissance du courant est la suivante :

$$I(t) = (I1 + U_{bob}/(R_{bob} + R_{eps})) \times \exp(-(t-t1) \times R_{bob}/L_{bob}) - U_{bob}/(R_{bob} + R_{eps})$$

avec

- $U_{bob}$ égale à la tension bobine ;
- $R_{eps}$ égale à la somme des résistances supplémentaires présentes dans le circuit électronique, telles que la résistance des moyens de mesure 24 et/ou la résistance de commutateur à l'état passant) ;
- $L_{bob}$ : Self de la bobine ;
- t1 un temps de mesure de la décroissance du courant, pour lequel la valeur du courant est I1.

Si le temps de mesure est égal à la valeur t2, alors la seconde valeur étalon I2 peut s'écrire sous la forme suivante :

$$I2 = (I1 + U_{bob}/(R_{bob} + R_{eps})) \times \exp(-DT \times R_{bob}/L_{bob}) - U_{bob}/(R_{bob} + R_{eps})$$

Avec DT = t2-t1, correspondant à la durée séparant les instants où le courant passe par les deux valeurs étalons I1 et I2, lors de sa décroissance.

Ce qui s'écrit aussi :

$$(I2 + U_{bob}/(R_{bob}+R_{eps})) / (I1 + U_{bob}/(R_{bob}+R_{eps})) = \exp(-DT \times R_{bob}/L_{bob})$$

Ainsi, l'évolution du courant I dans une bobine d'actionnement 3 soumis à une tension de retombée $U_{bob}$ connue, est directement liée à la Résistance $R_{bob}$ de ladite bobine. Les autres paramètres sont fixés ou connus.

La phase d'évaluation de la température est réalisée grâce à la connaissance de $R_{bob}$. La température de la bobine d'actionnement 3 s'exprime sous la forme de l'équation :

$$T_{bob} = T_{init} + \frac{R_{bob}/R_{init} - 1}{\alpha}$$

Avec

- $\alpha$ : coefficient thermique de la résistance électrique (environ 0,004 $K^{-1}$)
- $R_{init}$ égale à une résistance de la bobine à une température dite initiale $T_{init}$
- $T_{init}$ égale à une température dite initiale généralement égale à une température ambiante.

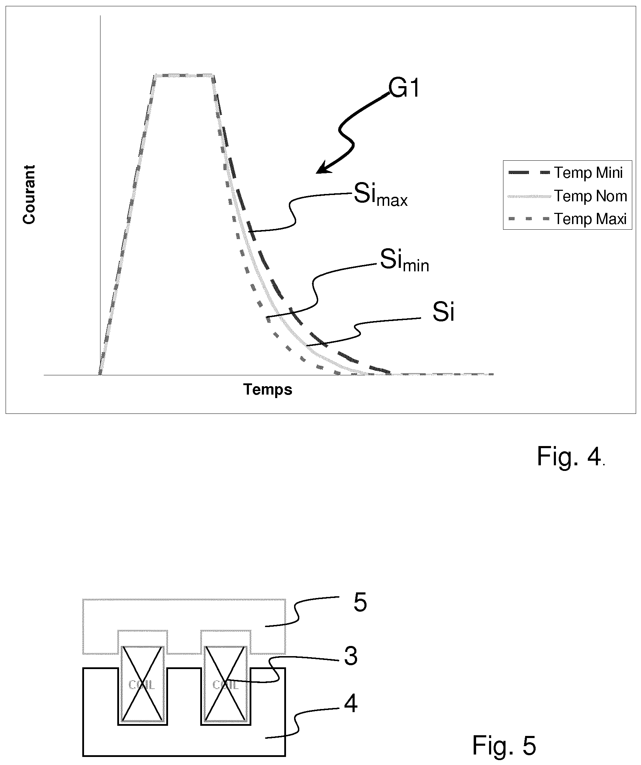

Selon un second mode préférentiel de réalisation de l'invention, la phase d'acquisition des valeurs spécifiques sur le signal de courant électrique I circulant dans la bobine d'actionnement 3 consiste à relever une courbe de décroissance Si du courant électrique I dans la bobine d'actionnement 3 entre la première valeur étalon I1 et une seconde valeur étalon I2. La phase d'analyse et d'évaluation consiste alors comparer ladite courbe Si de décroissance à un gabarit G1 de fonctionnement spécifique du contacteur. Comme représenté sur la figure 4, le gabarit de fonctionnement G1 comporte deux courbes de décroissance théorique $Si_{max}$, $Si_{min}$.

Une première courbe de décroissance théorique $Si_{max}$ correspond à un contacteur fonctionnant à une température minimale acceptable.

Une seconde courbe de décroissance théorique $Si_{min}$ correspond à un contacteur fonctionnant à une température maximale acceptable.

L'évaluation de la température du contacteur est alors fonction du positionnement de ladite courbe de décroissance Si par rapport aux deux courbes de décroissance théoriques du gabarit G1.

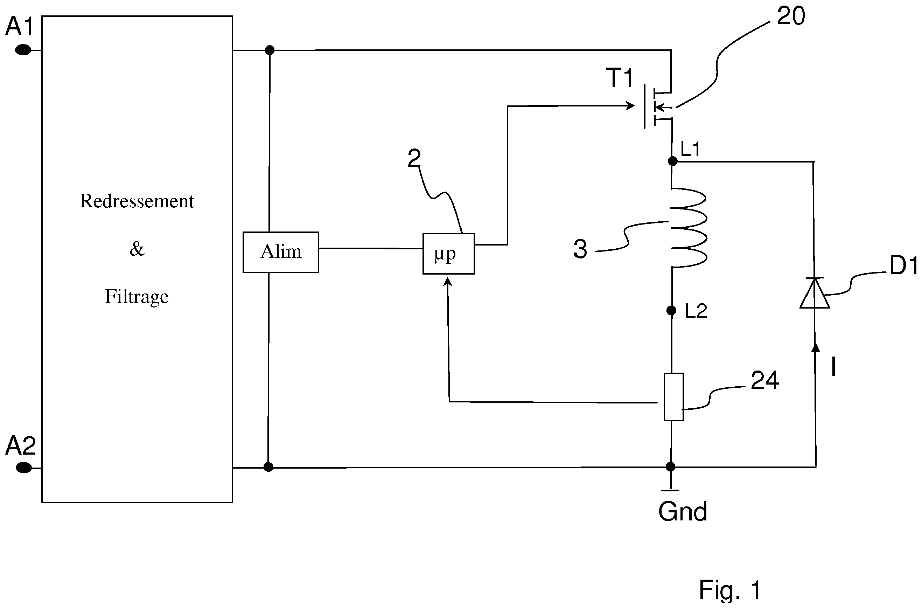

Le contacteur pour la mise en oeuvre du procédé selon l'invention comporte alors des moyens de mesure 24 du courant électrique I, circulant dans la bobine d'actionnement 3 (figure 1). Lesdits moyens peuvent comporter un shunt résistif placé en série avec la bobine d'actionnement 3. Enfin, une diode de roue libre D1 est connectée en parallèle de l'ensemble constitué de ladite au moins bobine d'actionnement 3, du moyen de mesure 24 du courant électrique I.

Des moyens de commande 20 envoient un ordre de retombée consistant à fixer une tension dite de retombée aux bornes L1, L2 de la bobine d'actionnement 3. La tension de retombée est alors fixée par la diode de roue libre D1.

La bobine est alors en mode « roue-libre » pendant la phase de mesure.

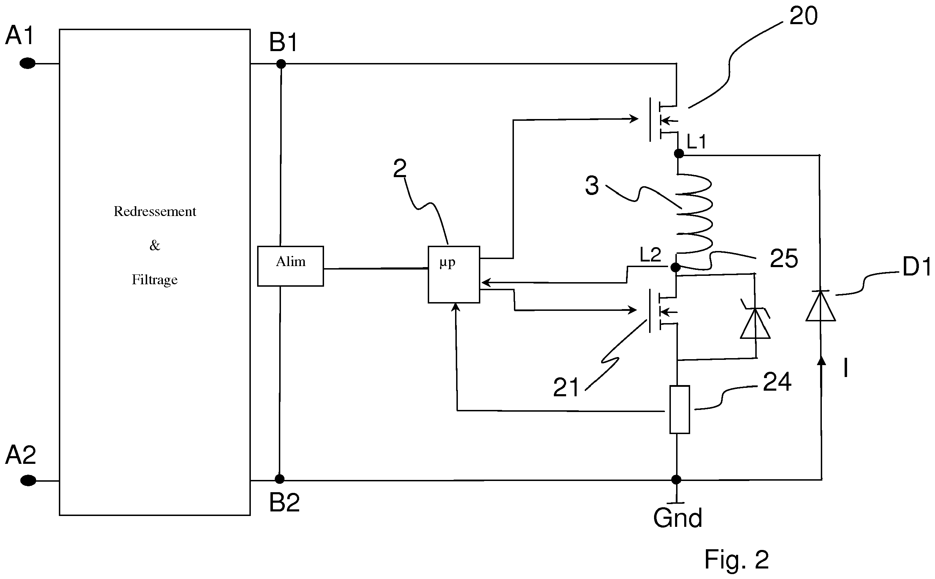

Selon une variante de réalisation, une diode Zener Dz peut éventuellement être connectée en série avec la bobine d'actionnement 3. Selon la figure 2, la diode Zener Dz est insérée de préférence en série avec la bobine d'actionnement 3 et les moyens de mesure 24 du courant électrique I. Des moyens de shuntage 21 connectés en parallèle de ladite diode sont aptes à shunter ladite diode Zener lorsque que ces derniers sont dans une position fermée. La tension de retombée peut alors être fixée par la diode « zener », les moyens de « shuntage » 21 étant dans une position ouverte. La bobine est alors en mode « zener » pendant la phase de mesure.

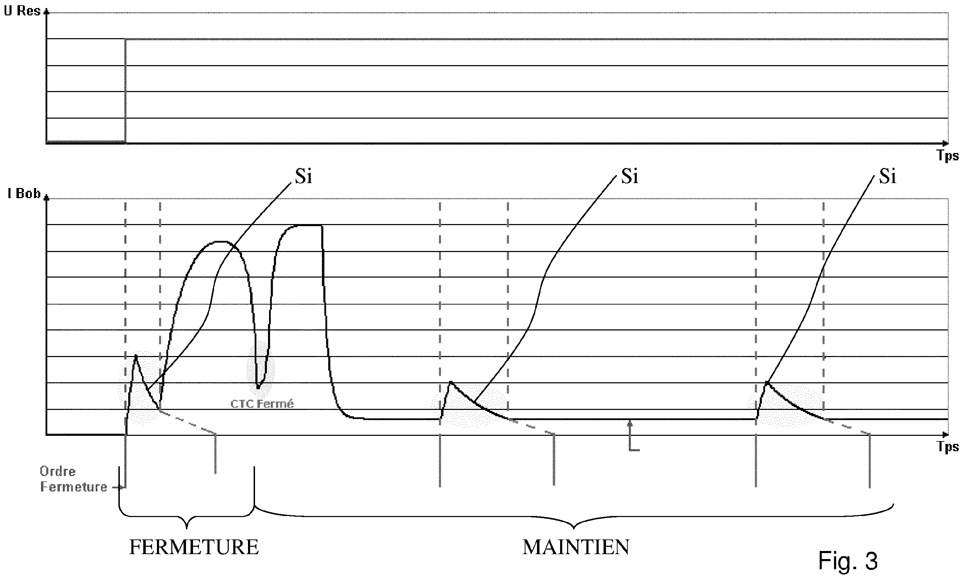

Comme représenté sur la figure 3, le procédé d'évaluation de température selon l'invention peut être appliqué au début de la phase de fermeture d'un contacteur de manière à pouvoir empêcher la fermeture de ce dernier, si les conditions de température sont défavorables. Par ailleurs, le procédé d'évaluation de température selon l'invention peut être aussi appliqué de manière périodique pendant la phase de maintien du contacteur électromagnétique en position fermée, de manière à informer régulièrement de l'état thermique.

## Revendications

1. Procédé d'évaluation de la température d'un contacteur comprenant :

   - une unité de traitement (2) destinée à agir sur des moyens de commande (20) de la tension appliquée à une bobine d'actionnement ;
   - au moins une bobine d'actionnement (3) ;
   - des moyens de mesure (24) du courant électrique (I) circulant dans ladite au moins une bobine d'actionnement (3) ;

   procédé, **caractérisé en ce qu'**il consiste à :

   - envoyer un ordre de fermeture consistant à appliquer une tension aux bornes (L1, L2) de la bobine d'actionnement (3) permettant de faire évoluer le courant électrique (I) circulant dans la bobine jusqu'à une première valeur étalon (I1) ;
   - envoyer un ordre de retombée consistant à fixer une tension dite de retombée aux bornes (L1, L2) de la bobine d'actionnement (3) ;
   - mesurer le courant électrique (I) circulant de ladite bobine d'actionnement (3) ;
   - faire l'acquisition de valeurs spécifiques sur un signal du courant électrique (I) ;
   - analyser des valeurs spécifiques pour une évaluation de la température de fonctionnement de la bobine d'actionnement (3).

2. Procédé d'évaluation selon la revendication 1, **caractérisé en ce que** la phase d'acquisition de valeurs spécifiques sur le signal de courant électrique (I) circulant dans la bobine d'actionnement (3) consiste à déterminer une seconde valeur étalon (I2) du courant électrique, la seconde valeur étalon (I2) étant atteinte après un temps de décroissance (DT).

3. Procédé d'évaluation selon la revendication 2, **caractérisé en ce qu'**il consiste à déterminer une seconde valeur étalon (I2) égale à la valeur du courant (I) électrique circulant dans la bobine d'actionnement (3) après un temps de décroissance (DT) déterminé, la seconde valeur étalon (I2) étant inférieure à la première valeur étalon (I1).

4. Procédé d'évaluation selon la revendication 2, **caractérisé en ce qu'**il consiste à déterminer un temps de décroissance (DT) du courant électrique (I) circulant dans la bobine d'actionnement (3) pour atteindre une valeur (I2) de courant électrique, la seconde valeur étalon (I2) étant fixée et étant inférieure à la première valeur étalon (I1).

5. Procédé d'évaluation selon l'une des revendications 2 à 4, **caractérisé en ce qu'**il consiste à déterminer la valeur de la résistance ($R_{bob}$) de la bobine d'actionnement (3) à partir des première et seconde valeurs étalon (I1, I2) et du temps de décroissance (DT), ladite résistance ($R_{bob}$) de la bobine d'actionnement s'exprimant sous la forme de l'équation :

$$(I2 + U_{bob}/(R_{bob}+R_{eps})) / (I1 + U_{bob}/(R_{bob}+R_{eps})) = exp(-DT \times R_{bob}/L_{bob})$$

dans laquelle

- $U_{bob}$ égale à la tension bobine ;
- $R_{eps}$ égale à la somme des résistances supplémentaires présentes dans le circuit électronique ;
- $L_{bob}$ : Self de la bobine.

**6.** Procédé d'évaluation selon la revendication 5, **caractérisé en ce qu'**il consiste à évaluer la température du contacteur en fonction de la résistance ($R_{bob}$) de la bobine d'actionnement, la température de la bobine d'actionnement (3) s'exprimant sous la forme de l'équation :

$$T_{bob} = T_{init} + \frac{R_{bob} / R_{init} - 1}{\alpha}$$

dans laquelle

- $\alpha$ : coefficient thermique de la résistance électrique (environ 0,004)
- $R_{init}$ égale à une résistance de la bobine à une température dite initiale $T_{init}$.
- $T_{init}$ égale à une température dite initiale généralement égale à une température ambiante.

**7.** Procédé d'évaluation selon la revendication 1, **caractérisé en ce que** la phase d'acquisition des valeurs spécifiques sur le signal de courant électrique (I) circulant dans la bobine d'actionnement (3) consiste à relever une courbe de décroissance (Si) du courant électrique I dans ladite bobine entre la première valeur étalon (I1) et une seconde valeur étalon (12).

**8.** Procédé d'évaluation selon la revendication 7, **caractérisé en ce que** la phase d'analyse et d'évaluation consiste comparer ladite courbe de décroissance (Si) à un gabarit de fonctionnement (G1) spécifique du contacteur, l'évaluation de la résistance température du contacteur étant alors fonction du positionnement de ladite courbe de décroissance par rapport audit gabarit (G1).

**9.** Procédé d'évaluation selon l'une des revendications précédentes, **caractérisé en ce que** l'étape consistant à envoyer un ordre de retombée en fixant une tension dite de retombée aux bornes (L1, L2) de la bobine d'actionnement (3) est précédée d'une phase de stabilisation du courant électrique (I).

**10.** Procédé d'évaluation selon la revendication 9, **caractérisé en ce que** le courant électrique (I) est stabilisé à la première valeur étalon (I1).

**11.** Procédé d'évaluation selon l'une des revendications précédentes, **caractérisé en ce que** la tension de retombée est fixée par la diode de roue libre (D1), la bobine d'actionnement (3) étant en mode « roue libre » pendant tout le temps de décroissance (DT).

**12.** Contacteur pour la mise en oeuvre du procédé d'évaluation de la température selon les revendications 1 à 11, comportant :

- un actionneur électromagnétique ayant une culasse magnétique (4) et un noyau ferromagnétique mobile (5) ;
- des moyens de commande (20) d'une bobine d'actionnement ;
- une bobine d'actionnement (3) reliée aux moyens de commande (20) ;
- des moyens de mesure (24) du courant électrique (I) dans la bobine d'actionnement (3)
- une unité de traitement (2) destinée à agir sur des moyens de commande (20) d'une tension appliquée à une bobine d'actionnement contacteur **caractérisé en ce que** au moins une diode de de roue libre (D1) est connectée en parallèle de l'ensemble constitué de ladite au moins une bobine d'actionnement (3) et les moyens de mesure (24) du courant électrique (I) et **en ce que l'**unité de traitement (2) comprend :

  - des moyens pour envoyer un ordre de fermeture consistant à appliquer une tension aux bornes (L1, L2) de la bobine d'actionnement (3) permettant de faire évoluer le courant électrique (I) circulant dans la bobine jusqu'à une première valeur étalon (I1) ;
  - des moyens pour envoyer un ordre de retombée consistant à fixer une tension dite de retombée aux bornes (L1, L2) de la bobine d'actionnement (3) ;

- des moyens pour mesurer le courant électrique (I) circulant de ladite bobine d'actionnement (3) ;
- des moyens pour faire l'acquisition de valeurs spécifiques sur un signal du courant électrique (I) ;
- des moyens pour analyser des valeurs spécifiques pour une évaluation de la température de fonctionnement de la bobine d'actionnement (3).

**Patentansprüche**

1.  Verfahren zur Bewertung der Temperatur eines Schützes, das enthält:

    - eine Verarbeitungseinheit (2), die dazu bestimmt ist, auf Steuereinrichtungen (20) der an eine Betätigungsspule angelegten Spannung einzuwirken;
    - mindestens eine Betätigungsspule (3);
    - Messeinrichtungen (24) des in der mindestens einen Betätigungsspule (3) fließenden elektrischen Stroms (I);

    Verfahren, **dadurch gekennzeichnet, dass** es darin besteht:

    - einen Schließbefehl zu senden, der darin besteht, eine Spannung an die Klemmen (L1, L2) der Betätigungsspule (3) anzulegen, was es ermöglicht, den in der Spule fließenden elektrischen Strom (I) sich bis zu einem ersten Standardwert (I1) entwickeln zu lassen;
    - einen Abfallbefehl zu senden, der darin besteht, eine so genannte Abfallspannung an den Klemmen (L1, L2) der Betätigungsspule (3) festzulegen;
    - den fließenden elektrischen Strom (I) der Betätigungsspule (3) zu messen;
    - die Erfassung spezifischer Werte in einem Signal des elektrischen Stroms (I) durchzuführen;
    - die spezifischen Werte für eine Bewertung der Betriebstemperatur der Betätigungsspule (3) zu analysieren.

2.  Bewertungsverfahren nach Anspruch 1, **dadurch gekennzeichnet, dass** die Erfassungsphase spezifischer Werte im Signal eines in der Betätigungsspule (3) fließenden elektrischen Stroms (I) darin besteht, einen zweiten Standardwert (I2) des elektrischen Stroms zu bestimmen, wobei der zweite Standardwert (I2) nach einer Abnahmezeit (DT) erreicht wird.

3.  Bewertungsverfahren nach Anspruch 2, **dadurch gekennzeichnet, dass** es darin besteht, einen zweiten Standardwert (I2) gleich dem Wert des in der Betätigungsspule (3) nach einer bestimmten Abnahmezeit (DT) fließenden elektrischen Stroms (I) zu bestimmen, wobei der zweite Standardwert (I2) niedriger als der erste Standardwert (I1) ist.

4.  Bewertungsverfahren nach Anspruch 2, **dadurch gekennzeichnet, dass** es darin besteht, eine Abnahmezeit (DT) des in der Betätigungsspule (3) fließenden elektrischen Stroms (I) zu bestimmen, um einen Wert (I2) des elektrischen Stroms zu erreichen, wobei der zweite Standardwert (I2) festgelegt und niedriger als der erste Standardwert (I1) ist.

5.  Bewertungsverfahren nach einem der Ansprüche 2 bis 4, **dadurch gekennzeichnet, dass** es darin besteht, den Wert des Widerstands ($R_{bob}$) der Betätigungsspule (3) ausgehend von den ersten und zweiten Standardwerten (I1, I2) und der Abnahmezeit (DT) zu bestimmen, wobei der Widerstand ($R_{bob}$) der Betätigungsspule in Form der Gleichung ausgedrückt wird:

$$(I2 + U_{bob}/(R_{bob}+R_{eps})) / (I1 + U_{bob}/(R_{bob}+R_{eps})) = \exp(-DT \times R_{bob}/L_{bob})$$

    mit

    - $U_{bob}$ gleich der Spulenspannung;
    - $R_{eps}$ gleich der Summe der im Elektronikschaltkreis vorhandenen zusätzlichen Widerstände;
    - $L_{bob}$: Drossel der Spule.

6.  Bewertungsverfahren nach Anspruch 5, **dadurch gekennzeichnet, dass** es darin besteht, die Temperatur des Schützes abhängig vom Widerstand ($R_{bob}$) der Betätigungsspule zu bewerten, wobei die Temperatur der Betätigungsspule (3) in Form der Gleichung ausgedrückt wird:

$$T_{bob} = T_{init} + \frac{R_{bob}/R_{init} - 1}{\alpha}$$

mit

- $\alpha$: Wärmekoeffizient des elektrischen Widerstands (etwa 0,004)
- $R_{init}$ gleich einem Widerstand der Spule bei einer so genannten Anfangstemperatur $T_{init}$.
- $T_{init}$ gleich einer so genannten Anfangstemperatur allgemein gleich einer Umgebungstemperatur.

7. Bewertungsverfahren nach Anspruch 1, **dadurch gekennzeichnet, dass** die Erfassungsphase der spezifischen Werte im Signal eines in der Betätigungsspule (3) fließenden elektrischen Stroms (I) darin besteht, eine Abnahmekurve (Si) des elektrischen Stroms I in der Spule zwischen dem ersten Standardwert (I1) und einem zweiten Standardwert (I2) zu erfassen.

8. Bewertungsverfahren nach Anspruch 7, **dadurch gekennzeichnet, dass** die Analyse- und Bewertungsphase darin besteht, die Abnahmekurve (Si) mit einem spezifischen Betriebsmaß (G1) des Schützes zu vergleichen, wobei die Bewertung des Temperaturwiderstands des Schützes dann von der Positionierung der Abnahmekurve bezüglich des Maßes (G1) abhängt.

9. Bewertungsverfahren nach einem der vorhergehenden Ansprüche, **dadurch gekennzeichnet, dass** vor dem Schritt, der darin besteht, einen Abfallbefehl zu senden, indem eine so genannte Abfallspannung an den Klemmen (L1, L2) der Betätigungsspule (3) festgelegt wird, eine Phase der Stabilisierung des elektrischen Stroms (I) liegt.

10. Bewertungsverfahren nach Anspruch 9, **dadurch gekennzeichnet, dass** der elektrische Strom (I) auf dem ersten Standardwert (I1) stabilisiert wird.

11. Bewertungsverfahren nach einem der vorhergehenden Ansprüche, **dadurch gekennzeichnet, dass** die Abfallspannung durch die Freilaufdiode (D1) festgelegt wird, wobei die Betätigungsspule (3) während der ganzen Abnahmezeit (DT) im "Freilauf"-Modus ist.

12. Schütz zur Durchführung des Bewertungsverfahrens der Temperatur nach den Ansprüchen 1 bis 11, das aufweist:

    - ein elektromagnetisches Stellglied, das ein Magnetjoch (4) und einen beweglichen ferromagnetischen Kern (5) hat;
    - Steuereinrichtungen (20) einer Betätigungsspule;
    - eine mit den Steuereinrichtungen (20) verbundene Betätigungsspule (3);
    - Messeinrichtungen (24) des elektrischen Stroms (I) in der Betätigungsspule (3)
    - eine Verarbeitungseinheit (2), die dazu bestimmt ist, auf Steuereinrichtungen (20) einer Spannung einzuwirken, die an eine Betätigungsspule angelegt wird,

    Schütz, **dadurch gekennzeichnet, dass** mindestens eine Freilaufdiode (D1) mit der aus der mindestens einen Betätigungsspule (3) und den Messeinrichtungen (24) des elektrischen Stroms (I) bestehenden Einheit parallelgeschaltet ist, und dass die Verarbeitungseinheit (2) enthält:

    - Einrichtungen zum Senden eines Schließbefehls, der darin besteht, eine Spannung an die Klemmen (L1, L2) der Betätigungsspule (3) anzulegen, was es ermöglicht, den in der Spule fließenden elektrischen Strom (I) sich bis zu einem ersten Standardwert (I1) entwickeln zu lassen;
    - Einrichtungen zum Senden eines Abfallbefehls, der darin besteht, eine so genannten Abfallspannung an den Klemmen (L1, L2) der Betätigungsspule (3) festzulegen;
    - Einrichtungen zum Messen des in der Betätigungsspule (3) fließenden elektrischen Stroms (I);
    - Einrichtungen zur Durchführung der Erfassung von spezifischen Werten in einem Signal des elektrischen Stroms (I);
    - Einrichtungen zur Analyse spezifischer Werte für eine Bewertung der Betriebstemperatur der Betätigungsspule (3).

**Claims**

1. Method for assessing the temperature of a contactor comprising:

   - a processing unit (2) intended to act on control means (20) controlling the voltage applied to an actuation coil;
   - at least one actuation coil (3);
   - measurement means (24) for measuring the electric current (I) circulating in said at least one actuation coil (3);

   method, **characterized in that** it consists in:

   - sending a closed command consisting in applying a voltage to the terminals (L1, L2) of the actuation coil (3) making it possible to alter the electric current (I) circulating in the coil to a first reference value (I1);
   - sending a drop-out command consisting in setting a so-called drop-out voltage at the terminals (L1, L2) of the actuation coil (3);
   - measuring the electric current (I) circulating in said actuation coil (3);
   - acquiring specific values on a signal of the electric current (I);
   - analysing specific values for an assessment of the operating temperature of the actuation coil (3).

2. Assessment method according to Claim 1, **characterized in that** the phase of acquisition of specific values on the electric current (I) signal circulating in the actuation coil (3) consists in determining a second reference value (I2) of the electric current, the second reference value (I2) being reached after a decay time (DT).

3. Assessment method according to Claim 2, **characterized in that** it consists in determining a second reference value (I2) equal to the value of the electric current (I) circulating in the actuation coil (3) after a determined decay time (DT), the second reference value (I2) being lower than the first reference value (I1).

4. Assessment method according to Claim 2, **characterized in that** it consists in determining a decay time (DT) of the electric current (I) circulating in the actuation coil (3) to reach an electric current value (I2), the second reference value (I2) being set and lower than the first reference value (I1).

5. Assessment method according to one of Claims 2 to 4, **characterized in that** it consists in determining the value of the resistance ($R_{bob}$) of the actuation coil (3) from the first and second reference values (I1, I2) and the decay time (DT), said resistance ($R_{bob}$) of the actuation coil being expressed in the form of the equation:

$$(I2 + U_{bob}/(R_{bob}+R_{eps})) / (I1 + U_{bob}/(R_{bob}+R_{eps})) = \exp(-DT \times R_{bob}/L_{bob})$$

   in which

   - $U_{bob}$ equals the coil voltage;
   - $R_{eps}$ equals the sum of the additional resistances present in the electronic circuit;
   - $L_{bob}$: inductance of the coil.

6. Assessment method according to Claim 5, **characterized in that** it consists in assessing the temperature of the contactor as a function of the resistance ($R_{bob}$) of the actuation coil, the temperature of the actuation coil (3) being expressed in the form of the equation:

$$T_{bob} = T_{init} + \frac{R_{bob} / R_{init} - 1}{\alpha}$$

   in which

   - $\alpha$: thermal coefficient of the electrical resistance (approximately 0.004)
   - $R_{init}$ equals a resistance of the coil at a so-called initial temperature $T_{init}$,
   - $T_{init}$ equals a so-called initial temperature generally equal to an ambient temperature.

7. Assessment method according to Claim 1, **characterized in that** the phase of acquisition of the specific values on the electric current (I) signal circulating in the actuation coil (3) consists in recording a curve of decay (Si) of the electric current I in said coil between the first reference value (I1) and a second reference value (I2).

8. Assessment method according to Claim 7, **characterized in that** the analysis and assessment phase consists in comparing said decay curve (Si) to an operating mask (G1) specific to the contactor, the assessment of the temperature resistance of the contactor then being a function of the positioning of said decay curve relative to said mask (G1).

9. Assessment method according to one of the preceding claims, **characterized in that** the step consisting in sending a drop-out command by setting a so-called drop-out voltage at the terminals (L1, L2) of the actuation coil (3) is preceded by a phase of stabilization of the electric current (I).

10. Assessment method according to Claim 9, **characterized in that** the electric current (I) is stabilized at the first reference value (I1).

11. Assessment method according to one of the preceding claims, **characterized in that** the drop-out voltage is set by the free-wheeling diode (D1), the actuation coil (3) being in "free-wheeling" mode throughout the decay time (DT).

12. Contactor for implementing the temperature assessment method according to Claims 1 to 11, comprising:

    - an electromagnetic actuator having a magnetic yoke (4) and a mobile ferromagnetic core (5);
    - control means (20) controlling an actuation coil;
    - an actuation coil (3) linked to the control means (20);
    - measurement means (24) measuring the electric current (I) in the actuation coil (3);
    - a processing unit (2) intended to act on control means (20) controlling a voltage applied to an actuation coil

contactor **characterized in that** at least one free-wheeling diode (D1) is connected in parallel to the assembly made up of said at least one actuation coil (3) and the measurement means (24) measuring the electric current (I) and **in that** the processing unit (2) comprises:

    - means for sending a closed command consisting in applying a voltage to the terminals (L1, L2) of the actuation coil (3) making it possible to alter the electric current (I) circulating in the coil to a first reference value (I1);
    - means for sending a drop-out command consisting in setting a so-called drop-out voltage at the terminals (L1, L2) of the actuation coil (3);
    - means for measuring the electric current (I) circulating in said actuation coil (3);
    - means for acquiring specific values on a signal of the electric current (I);
    - means for analysing specific values for an assessment of the operating temperature of the actuation coil (3).

A1

20

T1

Redressement
&
Filtrage

2

Alim

μp

3

L1

L2

24

D1

I

Gnd

A2

Fig. 1

EP 2 600 376 B1

Fig. 2

Fig. 3

Fig. 4.

Fig. 5

**EP 2 600 376 B1**

## RÉFÉRENCES CITÉES DANS LA DESCRIPTION

### Documents brevets cités dans la description

- US 2008074215 A1